# EUROPEAN PATENT APPLICATION

(11) **EP 2 047 818 A2**
(43) Date of publication of application: **15.04.2009**
(21) Application number: 08388034.4
(22) Date of filing: 08.10.2008
(51) Int. Cl.: A61C 1/00

(54) **A water supply unit to protect drinking water against pollution, and use of the water supply unit**

(30) Priority: 12.10.2007 DK 200701479
(71) Applicant: Heka Dental ApS, 2635 Ishoj (DK)
(72) Inventor: Geisshirt, Leon, 2680 Solrød Strand (DK); Nielsen, Thomas Steen, 2650 Brøndby Strand (DK)
(74) Representative: Larsen, Hans Ole

(57) **Abstract**

A water supply unit to ensure that drinking water, which is transferred from a drinking water connection to the water-consuming parts of a dentist's unit, is not polluted, consists of an upper container (1) which is connected with a lower container (2) via a valve (3), which has a large opening. In addition, the upper container is provided with an overflow (14), where water may be transferred via the overflow (14) to an outlet/overflow via an outer container (5) which surrounds the upper container (1) and the lower container (2).

Drinking water is supplied to the upper container (1) and the lower container (2) by the opening of valves (3, 6).

Since the upper container has the overflow (14), there will always be an air gap between the water level at the edge of the overflow (14) and the outlet/overflow of a pipe (27), said pipe (27) being connected with the valve (6). This ensures that the drinking water will never be polluted, since the water from the valve (6) cannot get into contact with the water in the upper container (1).

In an embodiment, the upper container (1) is connected with a chemical reservoir (22) via a pump (7) or a reservoir and a valve (16).

In addition, the water supply unit has a control unit (26) which adjusts the supply of drinking water and optionally chemical.

## Description

The invention relates to a water supply unit which is connected with a water reservoir, such as a household water connection, via a valve, said water supply unit being protected against pollution of the water from the water reservoir.

Further, the invention relates to a use of the water supply unit.

Such a water supply unit is used in connection with water-consuming equipment which gets into contact with polluting sources, which is the case, for example with water-consuming equipment which is incorporated in a dentist's unit, which is to be capable of discharging drinking water and also water which is used during the treatment of a patient.

Of course, it is extremely important that the water which is transferred to the water-consuming parts of a dentist's unit, e.g. from a public drinking water supply, may not in any way be mixed with the water from the drinking water supply.

It is observed in this connection that due safety cannot be achieved by connecting a non-return valve between the drinking water supply and the water-consuming parts of a dentist's unit, as is known e.g. in connection with the installation of washing machines.

Accordingly, an object of the invention is to achieve a better safeguard against pollution of drinking water when it is used in connection with equipment where the pollution may be critical.

The object of the invention is achieved by a water supply unit of the type defined in the introductory portion of claim 1, which is characterized in that the water supply unit is composed of an upper container and a lower container which are connected with each other by means of a valve, and that the lower container is connected with an assembly with pumping effect, such as a source of compressed air, and that an overflow is arranged in association with the upper container.

It is ensured in this manner that the water from the household connection is cut off from the water which is supplied to the water-consuming parts of a dentist's unit, as there will always be an air gap between the upper container and the water connection, ensuring that the drinking water supply does not get into contact with the water supplied to the upper container and the lower container.

When, as stated in claim 2, the upper container and the lower container are surrounded by an outer container, the upper container and the lower container are shielded from the surroundings, and, moreover, it has an condensation-reducing and noise-reducing effect.

Advantageously, as stated in claim 3, the upper container is equipped with a sensor which is adapted to detect an upper permitted water level.

To optimize the safety of the water supply unit additionally, it is moreover advantageous, as stated in claim 4, that the lower container is equipped with a sensor which is adapted to detect an upper permitted water level, and, as stated in claim 5, that the lower container is equipped with a sensor which is adapted to detect a lower permitted filling level, and, as stated in claim 6, that the lower container is equipped with a sensor which is adapted to detect a lower critical water level.

With a view to additionally enhancing the hygiene of both the water supply unit and of the equipment connected with the water supply unit, it is advantageous, as stated in claim 7, that the upper container is connected via a valve with a pump and a reservoir which is capable of adding a chemical, such as a disinfectant, and, as stated in claim 8, that in connection with the valve which is connected with the water reservoir, a flow meter is connected, which is adapted to measure the water flow through said valve and to apply a control signal to a control unit, which is additionally connected with the pump, which is connected with the reservoir containing a chemical, so that the supply of chemical through the valve may be adapted to the water flow through the valve.

To ensure the operation of the water supply unit with minimum periods of interruption, it is expedient, as stated in claim 9, that the valve consists of a valve housing having a large opening, wherein the opening may be opened and closed by means of a movable valve part, whose movement is provided by compressed air or other mechanical movement through a pipe in the valve housing.

As mentioned, the invention also relates to a use.

This use is defined in claim 10.

The invention will now be explained more fully with reference to the drawing, in which
- fig. 1: schematically shows the structure of the water supply unit according to the invention,
- fig. 2: shows a valve in a filling position, which is incorporated in the water supply unit of fig. 1, while
- fig. 3: shows the valve of fig. 2 in a closed position of operation.

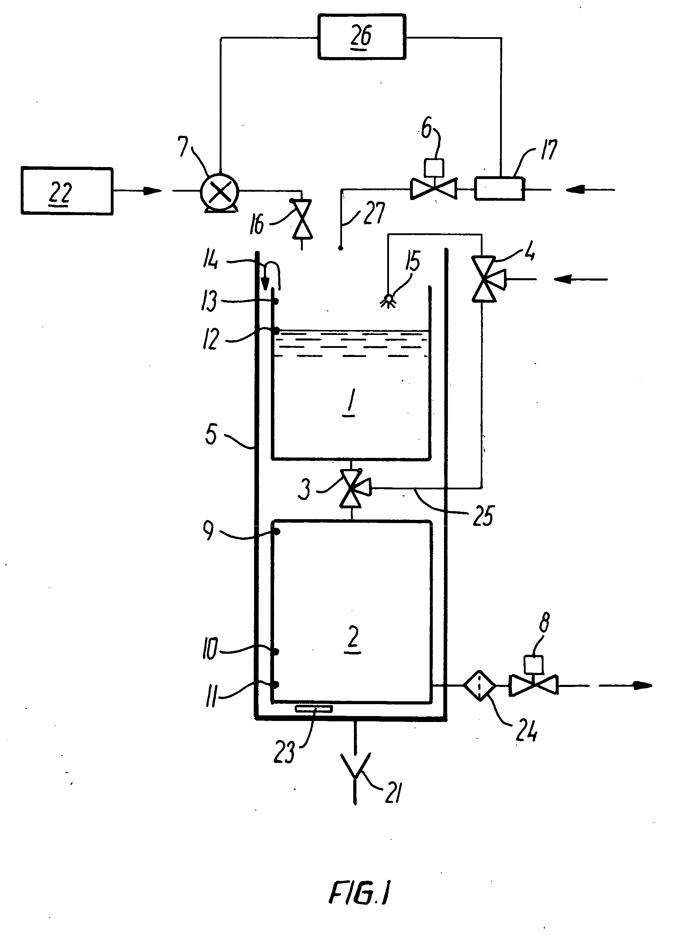

In fig. 1, the numeral 1 designates an upper container, which is connected with a lower container 2 via a valve 3.

The lower container 2 may be pressurized by the opening of a valve 4. This valve 3 is moreover connected with a silencer 15 which is partly introduced in the upper chamber.

The two containers 1, 2 are surrounded by an outer container 5 which, at the bottom, is connected with an outlet 21.

Via a pipe 27, the containers 1, 2 may be filled with water works water by the opening of a valve 6, which is moreover connected with a flow meter 17, which is adapted to send a flow signal to a control unit 26 in some operational situations, as will be explained later.

In addition, fig. 1 shows a chemical reservoir 22 which may contain a disinfectant, which may be supplied to the containers 1 and 2 by the opening of a valve 16 and the starting of a pump 7.

This pump 7 is capable of applying electrical pulses whose number is a measure of the amount of chemical supply from the reservoir 22, so that it may be detected whether the chemical supply takes place correctly, and if this is not the case, an acoustic alarm and a visual alarm will be applied. The pump applies its electrical pulses to the control unit 26.

As will additionally be seen, the lower container 2 is connected via a non-return valve 24 with a valve 8 which, when being opened, transfers water to an apparatus of consumption, e.g. to the water-consuming parts of a dentist's unit.

Three sensors 9, 10 and 11 are arranged inside the lower container 2, of which the sensor 9 is intended to detect an upper level of water in the lower container, while the sensor 10 is adapted to detect a lower water level in the lower container 2.

Finally, a sensor 11 is intended to indicate a critical level of the water level in the lower container.

This sensor 11 is connected with an alarm unit (not shown), which, when it detects a too low level in the lower container 2, closes all valves in the entire water supply system, and, at the same time, an acoustic alarm signal and a visual alarm signal are applied.

The upper container 1 is also provided with sensors 12, 13, where the one sensor 12 indicates an upper permitted liquid level in the upper container 1.

The other sensor 13 detects if the liquid level in the upper container 1 exceeds a certain limit value, and, where appropriate, puts the water supply system out of operation via the alarm unit (not shown) by the closing of all valves in the entire water supply unit. In addition, an acoustic alarm and a visual alarm are applied.

Finally, the upper container has an overflow 14 at the top, which is connected with the outer container 5, and which, in the event that the liquid level should get above the overflow 14, will convey liquid via the outer container 5 to the outlet 21, which may be provided with a small bowl which serves as an overflow.

Instead of the outlet 21, a liquid detector, shown here by the reference numeral 23, may be arranged inside the outer container, said liquid detector initiating an acoustic alarm and a visual alarm in the event that liquid is conveyed from the overflow 14.

As will be appreciated, there will always be an air gap between the outlet of the pipe 27 and the edge of the overflow 14, ensuring that water from the container 1 will never get into contact with water from the pipe 27.

As the valve 3 has a large opening, it is possible to use water with a minimum of pauses for the water-consuming parts of the dentist's unit, without it being necessary to establish pauses in the transfer of water.

It will then be explained how the water supply unit operates.

When the valve 6 is opened, water is supplied to the upper container 1 and/optionally to the lower container 2 when the valve 3 is open.

When the water in the lower container 2 reaches the level 9, the valve 3 is closed, as pressure is applied to the valve 4, causing the valve 3 to be closed.

The water in the lower container 2 may now be supplied to a unit of consumption, e.g. the water-consuming parts of a dentist's unit by the opening of the valve 8.

After the valve 3 has been closed, water may still be supplied to the upper container 1, until it reaches a level where the sensor 12 detects this, which causes the valve 6 to be closed.

When the level in the lower container 2 drops so much that the sensor 10 detects this, the valve 8 will close, at the same time as the valve 4 is closed, which means that the valve 3 is opened, causing water to be transferred to the container 2 from the container 1. During the transfer of water from the upper container 1 to the lower container 2, the valve 6 may be opened again and supply water to the upper container 1.

It should be observed in this connection that it is important that the valve 3 has a large opening, which means that it is possible to provide a very great flow of liquid from the upper container 1 to the lower container 2, which is advantageous when a patient is treated by a dentist, since sufficient water will thus always be present in the lower container 2.

In the event that the level of water in the lower container 2 gets below the sensor 11, all valves in the water supply unit will be closed, and an alarm will be applied to signal a state of fault.

Correspondingly, an alarm will be applied and all valves be closed, if the level of water in the upper container 1 is detected by the sensor 12.

If the container 1 should be filled with more water than it can contain, excess water may be conveyed via the overflow 14 to the outer container 5 and from there to the outlet 21 via an overflow arranged in connection with the outlet 21.

If an outlet is not connected, but the liquid detector 23 is arranged in the lower container, it will be able to detect overflow liquid and apply a signal to an alarm unit, which is capable of applying an acoustic alarm signal and a visual alarm signal.

It has been explained above how the water supply unit operates in normal operation, and how it operates when a fault occurs.

However, the water supply unit may also be used for the cleaning of the water-consuming parts of a dentist's unit, as will be explained now.

When cleaning is to be performed, the valve 3 is opened, while the valve 4 is kept closed. The valve 6 and the valve 16 are now opened, whereby water and chemical are supplied to the upper container 1, in which they are mixed. Then, the mixture is transferred to the lower container 2, which is emptied, following which the process is repeated. During the process, it is measured in the control unit 26 how much chemical is pumped by means of the pump 7, as the pump applies electrical pulses to the control unit, the number of which is a measure of the amount of chemical supply, including that there is no chemical supply.

The flow meter 17 also applies a signal to the control unit 26, whereby the measured amounts of water and chemical in the control unit 26 may be used for adjusting the amounts of the flow of water and chemical in suitable proportions.

Thus, the control unit 26 detects via the flow meter 17 and the electrical pulses of the pump 7 whether the supply of chemical and the supply of water are correct at any time, also when no chemical is to be supplied.

When the cleaning process has been completed, and both chambers have been emptied, the valve 3, the valve 6, the outlet 21 and/or the valve 8 are opened for the flushing of the water supply unit and of the water-consuming parts of the dentist's unit, following which the water supply unit is ready for normal operation.

As will be seen in fig. 1, fig. 2 and fig. 3, the valve has a rather simple structure, as it consists of a valve housing 3 in which a valve part 18 is arranged.

The valve housing 3 has a large opening, shown at 19, which permits a great flow through it

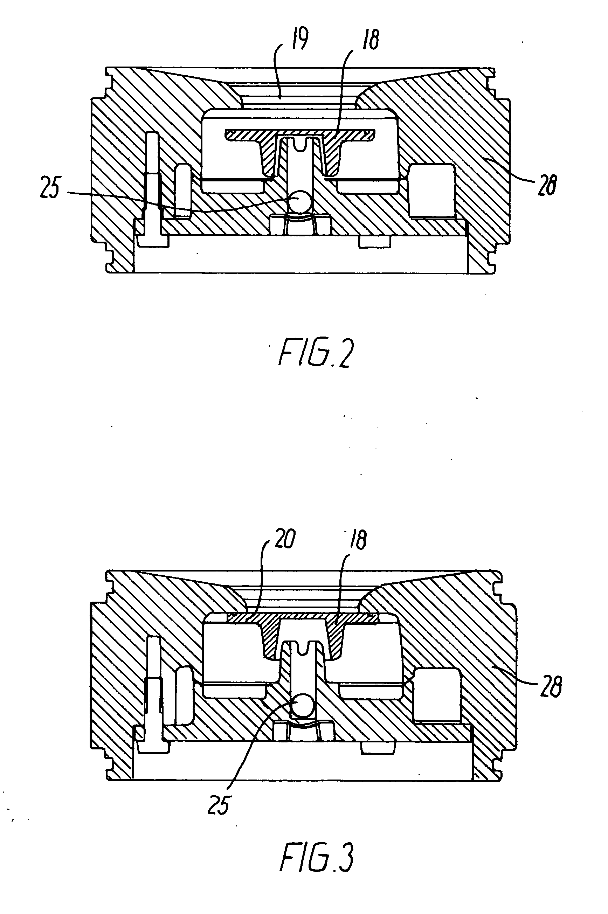

As will additionally be seen in fig. 2 and fig. 3, it is connected with a pipe 25, which is in turn connected with the valve 4 (fig. 1).

In fig. 2, the valve part 18 is open, corresponding to the valve 4 (fig. 1) being closed, so that water may pass from the upper chamber 1 to the lower chamber 2.

In fig. 3, the valve part 18 is closed, as it adjoins a valve seat 20 in the valve housing 3, which takes place when the valve 4 (fig. 1) is opened for the supply of air pressure to the lower container 2.

Although the invention has been explained in connection with some specific operational situations, nothing prevents it from being used in alternative operational situations within the scope defined by the patent claims.

For instance, it is not strictly necessary that the lower container is filled completely before the valve 4 is caused to close the valve 3 via compressed air.

It may e.g. be conceivable that during the periods where no water is tapped via the valve 8, the valve 4 (fig. 1) may be closed, so that water is currently supplied to the lower container 2 (fig. 1).

Likewise, compressed air to the lower container 2 may be replaced by an assembly that provides a pumping effect.

At the moment when water is to be tapped again via the valve 8 (fig. 1), this may be opened, which causes the valve 3 (fig. 1) to be closed.

## Claims

1. A water supply unit, which is connected with a water reservoir, such as a household water connection, via a valve (6), said water supply unit being protected against pollution of the water from the water reservoir, **characterized in that** the water supply unit is composed of an upper container (1) and a lower container (2) which are connected with each other by means of a valve (3), and that the lower container (2) is connected with an assembly with pumping effect, such as a source of compressed air, and that an overflow (14) is arranged in association with the upper container.

2. A water supply unit according to claim 1, **characterized in that** the upper container (1) and the lower container (2) are surrounded by an outer container (5).

3. A water supply unit according to claims 1-2, **characterized in that** the upper container is equipped with a sensor (12) which is adapted to detect an upper permitted water level.

4. A water supply unit according to claims 1-3, **characterized in that** the lower container (2) is equipped with a sensor (9) which is adapted to detect an upper permitted water level.

5. A water supply unit according to claims 1-4, **characterized in that** the lower container (2) is equipped with a sensor (10) which is adapted to detect a lower permitted water level.

6. A water supply unit according to claims 1-5, **characterized in that** the lower container (2) is equipped with a sensor (11) which is adapted to detect a lower critical water level.

7. A water supply unit according to claims 1-6, **characterized in that** the upper container (1) is connected via a valve (16) with a pump (7) and/or a reservoir (22) which is capable of adding a chemical, such as a disinfectant.

8. A water supply unit according to claims 1-7, **characterized in that** in connection with the valve (6) which is connected with the water reservoir, a flow meter (17) is connected, which is adapted to measure the water flow through said valve (6) and to apply a control signal to a control unit (26), which is additionally connected with the pump (7), which is connected with the reservoir (22) containing a chemical, so that the supply of chemical through the valve (16) is adapted to the water flow through the valve (6).

9. A water supply unit according to claims 1-8, **characterized in that** the valve (3) consists of a valve housing (28) with a large opening (19), wherein the opening (19) may be opened and closed by means of a movable valve part (18), whose movement is provided by compressed air or another mechanical movement through a pipe (25) in the valve housing (28).

10. Use of a water-consuming unit according to claims 1 - 8 for the supply of water to the water-consuming parts of a dentist's unit.
